## Europäisches Patentamt

## European Patent Office

## Office européen des brevets

(11) Veröffentlichungsnummer: **0 163 103 B1**

(12)
# EUROPÄISCHE PATENTSCHRIFT

(45) Veröffentlichungstag der Patentschrift:
18.01.89

(51) Int. Cl.⁴: **H 04 M 3/36**, H 04 Q 11/04

(21) Anmeldenummer: **85104726.6**

(22) Anmeldetag: **18.04.85**

(54) **Schaltungsanordnung für Fernmeldevermittlungsanlagen, insbesondere Fernsprechvermittlungsanlagen, mit zur Erfassung von Anforderungen dienenden Zähleinrichtungen.**

(30) Priorität: **04.05.84 DE 3416592**

(43) Veröffentlichungstag der Anmeldung:
**04.12.85 Patentblatt 85/49**

(45) Bekanntmachung des Hinweises auf die Patenterteilung:
**18.01.89 Patentblatt 89/3**

(84) Benannte Vertragsstaaten:
**AT BE CH DE FR GB IT LI SE**

(56) Entgegenhaltungen:
EP-A- 0 104 637
EP-A- 0 121 236
DE-A- 3 328 571
FR-A- 2 402 904
GB-A- 2 001 227
US-A- 3 623 007

10th INTERNATIONAL TELETRAFFIC CONGRESS, 9.-15. Juni 1983, (ITC) Session 5.2, Paper 1, Seiten 436/1-436/7, Montreal, CA; P. TRAN-GIA: "Subcall-oriented modelling of overload control in SPC switching systems"
9th INTERNATIONAL TELETRAFFIC CONGRESS (ITC), Oktober 1979, Torremolinos, ES, Seiten 1-7; P. SOMOZA et al.: "Dynamic processor overload control" and its implementation in certain single-processor and

(73) Patentinhaber: **Siemens Aktiengesellschaft Berlin und München, Wittelsbacherplatz 2, D-8000 München 2 (DE)**

(72) Erfinder: **Daisenberger, Georg, Dipl.-Ing., Kärntner Platz 3, D-8000 München 21 (DE)**

(56) Entgegenhaltungen: (Fortsetzung)
multiprocessor SPC systems"
PATENTS ABSTRACTS OF JAPAN, Band 6, Nr. 132 (E-119)(1010), 17. Juli 1982; & JP - A - 57 58 453
9th INTERNATIONAL TELETRAFFIC CONGRESS (ITC), Oktober 1979, Torremolinos, ES, Seiten 1-7; A. BRICCOLI: "Comparison of regulation methods for traffic overloads in SPC systems"
NATIONAL TELECOMMUNICATIONS CONFERENCE, Band 1, Paper B.4.4., 29. November - 3. Dezember 1981, New Orleans, US, Seiten 1-5; E. ABDOU et al.: "Overload modelling of switching systems and the evaluation of overload controls"
7th INTERNATIONAL TELETRAFFIC CONGRESS, (ITC), Paper 436, 13.-20. Juni 1973, Stockholm, SE, Seiten 1-7; B. KARLANDER et al.: "Control of central processor load in a SPC system"
ELECTRONIC SWITCHING GRINSEC, 1983, Elsevier Science Publishers, Amsterdam, NL, Teil IV, Kapitel 1, Absatz 8, Seiten 411-415; "Traffic supervision and load control"
ANNALES DES TELECOMMUNICATIONS, Band 32, Nr. 9-10, 1977, Seiten 303-314, Issy-Les-Moulineux, FR; L. ROMOEUF: "Modèle de régulation de charge dans un autocommutateur téléphonique à commande centralisée"

## Beschreibung

Die Erfindung betrifft eine Schaltungsanordnung für Fernmeldevermittlungsanlagen, insbesondere Fernsprechvermittlungsanlagen, mit zur Erfassung von an ein Verarbeitungsschaltwerk gerichteten Verarbeitungsanforderungen dienenden Zähleinrichtungen, die nach Massgabe eines von einer Verkehrsmesseinrichtung an sie übertragenen Prozentsatzes eine Abweisung eines dementsprechenden Teiles dieser Verarbeitungsanforderungen bewirken.

Eine Schaltungsanordnung dieser Art beschreibt bereits die Europäische Patentanmeldung 134 009 (Priorität 8.8.83, Veröffentlichungstag 13.3.85) (VPA 83 P 1557). Darin ist eine Fernsprechvermittlungsanlage mit zentralen und dezentralen informationsverarbeitenden Schaltwerken beschrieben, die eine hinsichtlich der Informationsverarbeitungskapazität begrenzte Leistungsfähigkeit aufweisen. In einem zentralen Verarbeitungsschaltwerk ist eine Messeinrichtung zur Bestimmung eines Abweichens der akuten Informationsverarbeitungs-Arbeitsbelastung dieses Schaltwerkes von seiner Leistungsfähigkeit vorgesehen. Diese Messeinrichtung dient zur Erkennung von Informationsverarbeitungs-Verkehrsüberlastungen und zur Abwehr solcher Überlastungen. Es sind Übertragungsschaltmittel zur Meldung von Daten über das Abweichen der akuten Informationsverarbeitungs-Arbeitsbelastung bezüglich der Leistungsfähigkeit des zentralen Schaltwerks zu den dezentralen Schaltwerken vorgesehen. In diesen wird zur Abwehr solcher Überlastungen die Menge der einfallenden Informationsverarbeitungs-Aufträge nach Massgabe dieser Daten reduziert. Hierzu wird in den dezentralen Schaltwerken der Prozentsatz der abzuweisenden Verarbeitungsanforderungen gespeichert. Dieser gespeicherte Prozentsatz wird bei Eintreffen der genannten Daten erhöht bzw. herabgesetzt. In der genannten Offenlegungsschrift ist angegeben, dass der speicherbare Prozentsatz von jeweils abzuweisenden Verarbeitungsanforderungen 0%, 25%, 50% und 75% betragen kann. In der praktischen Auswirkung bedeutet dies, dass von sukzessive nacheinander eintreffenden Verarbeitungsanforderungen keine oder jede vierte oder drei von jeweils vier Verarbeitungsanforderungen abgewiesen wird bzw. werden. Es sind auch andere Prozentsätze denkbar, z.B. von 33,33% und 66,66% oder von 20, 40, 60 und 80% usw. Ein entsprechender Zähler, der die sukzessive nacheinander eintreffenden Verarbeitungsanforderungen abzählt, ist so aufgebaut, dass er nach Massgabe der jeweils zu berücksichtigenden Prozentsätze die hierzu erforderlichen Abzählvorgänge in der erforderlichen Weise ausführt.

Für die Erfindung besteht die Aufgabe, eine Zähleinrichtung anzugeben, die es auf einfache Weise erlaubt, den genannten Prozentsatz feiner abzustaffeln, insbesondere im Bereich relativ niedriger Prozentsätze. Dabei soll diese Abstaffelung auch weitgehend unabhängig werden von der Vorgabe einer solchen zufälligen Abstufung, die sich lediglich aus den Reziprokwerten einer Folge von ganzen Zahlen ergibt.

Die Erfindung löst die gestellte Aufgabe ausgehend von einer Schaltungsanordnung der eingangs angegebenen Art, wobei die durch eine Anzahl von Zählschritten in ihrem Zählvolumen begrenzte Zähleinrichtung Mittel enthält, durch die sie bei jeder Verarbeitungsanforderung um eine Anzahl von Zählschritten weitergeschaltet wird, die sich jeweils einerseits aus dem Prozentsatz von in dem betreffenden momentanen Betriebszustand abzuweisenden Verarbeitungsanforderungen und andererseits aus der dem Zählvolumen entsprechenden Gesamtzahl von Zählschritten als Produkt ergibt, und wobei die Zähleinrichtung Mittel enthält, die dann, wenn ihr Zählerstand das Zählvolumen erreicht, die Zähleinrichtung im Überlauf über den Nullstand zyklisch weiterschalten, und die veranlassen, dass die Zähleinrichtung jedesmal beim Überlauf einen Befehl zur Abweisung einer Verarbeitungsanforderung abgibt.

Durch die Erfindung wird erreicht, dass der Prozentsatz von Verarbeitungsanforderungen, die unter eine Abweisung fallen sollen, auf sehr einfache und übersichtliche Weise beliebig abgestuft werden kann. Umfasst das Zählvolumen z.B. 100 Zählschritte, so kann jeder ganzzahlige Prozentwert vorgegeben werden. Eine Vorgabe von Prozentwerten mit einer Genauigkeit von Zehntel-Prozent-Werten lässt sich bereits mittels einer Zähleinrichtung mit einem Zählvolumen von 1000 Zählschritten erreichen. Die Zähleinrichtung kann eine Anzahl von Zählgliedern aufweisen, die der Anzahl von Zählschritten innerhalb des jeweils gegebenen Zählvolumens gleich ist, kann aber auch den Zählvorgang codiert durchführen, z.B. im Zehnercode als Dezimalzähler oder im Zweiercode als Binärzähler. Im letzteren Falle z.B. kommt die Zähleinrichtung mit 10 Zählgliedern aus. Die angesprochene Feinabstufung hat besondere Bedeutung für den Anwendungsfall, dass jeweils ein relativ nur sehr niedriger Prozentsatz von Verarbeitungsanforderungen unter die Abweisung fallen soll. Diese Feinabstufung schafft die Möglichkeit, die Massnahme der Abweisung von Verarbeitungsanforderungen bei Vorhandensein einer grösseren Anzahl von teilzentralen Verarbeitungsschaltwerken, die ihre Verarbeitungsanforderungen an ein zentrales Verarbeitungsschaltwerk abgeben, dessen momentane Verkehrsüberlastung eine graduelle Abweisung von Verarbeitungsanforderungen erforderlich macht, gleichmässig auf sämtliche teilzentralen Verarbeitungsschaltwerke zu verteilen.

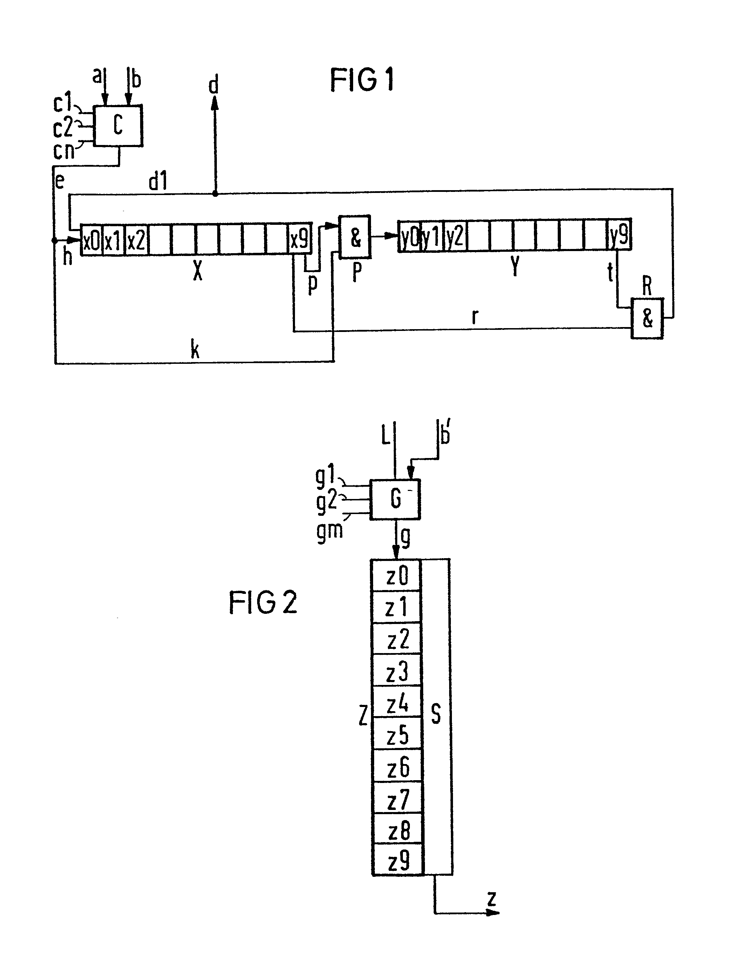

In den Zeichnungen Fig.1 und Fig.2 sind zwei Ausführungsbeispiele der Erfindung nur in wesentlich zu ihrem Verständnis beitragenden Bestandteilen dargestellt. Beide Ausführungsbeispiele gehen von einer Fernsprechvermittlungsstelle aus, wie sie in der bereits genannten deutschen Offenlegungsschrift 3 328 571 sowie in der Zeitschrift «telcom report», 4. Jahrgang (1981), Beiheft, beschrieben ist.

Eine in Fig.1 dargestellte Zähleinrichtung besteht aus zwei Schieberegistern X und Y. Diese Zähleinrichtung dient zur Erfassung von an ein Verarbeitungsschaltwerk gerichteten Verarbeitungsanforderungen. Diese Verarbeitungsanforderungen mögen in ursächlichem Zusammenhang mit Verbindungsherstellungsaufträgen stehen, wie sie in den genannten Literaturstellen im einzelnen beschrieben sind. Ein Verbindungsherstellungsauftrag umfasst in der Regel eine Anzahl von Verarbeitungsanforderungen. Bei jeder Verarbeitungsanforderung geht es darum, dass von den für eine Verbindungsherstellung erforderlichen und angelieferten Informationen jeweils erneut eine Verarbeitung der betreffenden Information angefordert wird. Diese Informationen mögen Wahlkennzeichen und andere, der Verbindungsherstellung, -aufrechterhaltung und -auslösung dienende Schaltkennzeichen sein. Diese Wahlkennzeichen und Schaltkennzeichen werden von den verschiedenen teilzentralen Verarbeitungsschaltwerken, wie z.B. den Gruppensteuerwerken, aufgenommen und machen jeweils eine Informationsverarbeitung erforderlich. Die teilzentralen Verarbeitungsschaltwerke geben jedes Mal ein eine Verarbeitungsanforderung meldendes Signal zu einem zentralen Verarbeitungsschaltwerk, z.B. einem zentralen Prozessor, hin ab.

Um nun den zentralen Prozessor in einer Fernsprechvermittlungsanlage der bekannten Art vor Verkehrsüberlastungen zu schützen, ist vorgesehen, dass von dem betreffenden zentralen Prozessor an die verschiedenen Gruppensteuerwerke Informationen über Prozentsätze von abzuweisenden Verarbeitungsanforderungen abgegeben werden. Erkennt also ein zentraler Prozessor an der momentanen Entwicklung der Verkehrsbelastungs-Situation, dass eine Verkehrsüberlastung auf ihn zukommt, so teilt er den verschiedenen Gruppensteuerwerken den genannten Prozentsatz mit, wodurch diese in der Lage sind, von den Verarbeitungsanforderungen einen dem betreffenden Prozentsatz entsprechenden Anteil abzuweisen. In bekannter Weise erhält dann ein jeweils rufender Teilnehmer Besetztton und hat keine Chance, den jeweils beabsichtigten Verbindungsaufbau bis zur Durchschaltung einer Verbindung zu bringen. Hierbei wird unterschieden zwischen Initialaufträgen und Folgeaufträgen. Einen Initialauftrag entspricht jeweils die erste Verarbeitungsanforderung von einer Reihe von Verarbeitungsanforderungen, die jeweils zu einer Verbindungsherstellung gehören. Den Folgeaufträgen dagegen entsprechen alle weiteren Verarbeitungsanforderungen, die jeweils zu derselben Verbindungsherstellung gehören. Es hat sich als zweckmässig erwiesen, nur die den Initialaufträgen entsprechenden Verarbeitungsanforderungen den genannten Massnahmen der Abweisung zu unterwerfen.

Von einer Verkehrsmesseinrichtung, die zum Beispiel Bestandteil eines zentralen Prozessors sein kann, würden also Informationen bezüglich eines Prozentsatzes abzuweisender Verarbeitungsanforderungen zu den Zähleinrichtungen gemäss Fig.1 und Fig.2 übertragen. Die Zähleinrichtung gemäss Fig.1 besteht nun aus zwei Schieberegistern X und Y, von denen jedes je 10 Zählglieder x0 bis x9 und y0 bis y9 aufweist. Dem Schieberegister X werden einzelne Zählimpulse über eine Leitung h zugeführt. Entsprechend der Anzahl der zugeführten Zählimpulse ist eines der Schieberegisterglieder x0 bis x9 in an sich bekannter Weise markiert. Überschreitet die Anzahl von Zählimpulsen die Zahl 10, so erfolgt in ebenfalls an sich bekannter Weise ein Übertrag über eine Übertragsleitung p. Dies geschieht mit Hilfe eines UND-Gliedes g, das den Übertrag bildet. Das Schieberegister X wird zyklisch weitergeschaltet, d.h. nach Markierung des Schieberegistergliedes x9 erfolgt bei Eintreffen eines nächsten Zählimpulses eine Markierung des Schieberegistergliedes x0. Diese zyklische Weiterschaltung ist bereits vielfältig bekannt. Das Schieberegister X wird also durch jeden einzelnen eintreffenden Zählimpuls weitergeschaltet. Das Schieberegister Y dagegen wird jeweils nur mit jedem zehnten Zählimpuls weitergeschaltet. Hierzu ist die Leitung k und die bereits genannte UND-Schaltung P vorgesehen. Hat die die Schieberegister X und Y umfassende Zähleinrichtung nach Fig.1 insgesamt 100 Zählimpulse über die Leitung e erhalten, so reagiert die UND-Schaltung R über die Leitungen t und r, indem sie feststellt, dass beide Schieberegister jeweils ihren End-Zählzustand erreicht haben. Die UND-Schaltung R gibt ein Signal ab, das über die Leitung b1 in an sich bekannter Weise bewirkt, dass bei den beiden Schieberegistern X und Y die Zählvorgänge jeweils von vorne beginnen. Die UND-Schaltung R gibt dieses Signal ausserdem über die Leitung zum betreffenden Verarbeitungsschaltwerk hin ab und signalisiert damit, dass in der Reihe der laufenden Verarbeitungsanforderungen eine Verarbeitungsanforderung abzuweisen ist.

Wesentlich im erfindungsgemässen Zusammenhang ist die Funktion einer Multiplikatorschaltung C, die in Figur 1 dargestellt ist. Dieser Multiplikatorschaltung wird über eine Leitung a mit jeder Verarbeitungsanforderung ein Anforderungsimpuls zugeführt. Über die Leitung b möge der Multiplikatorschaltung ein Zähltakt zugeführt werden. Ausserdem wird der Multiplikatorschaltung C über einen der Eingänge c1 bis cn der genannte Prozentsatz von abzuweisenden Verbindungsanforderungen mitgeteilt. Demgemäss wird z.B. einer dieser Eingänge markiert. Die Multiplikatorschaltung C gibt bei Eintreffen jeweils eines Anforderungsimpulses über die Leitung a eine Mehrzahl von Zählimpulsen über die Leitung e ab, und zwar jeweils nach Massgabe des genannten Prozentsatzes. Beträgt dieser Prozentsatz z.B. 4%, und trifft über die Leitung a ein Anforderungsimpuls bei der Multiplikatorschaltung C ein, so gibt sie vier Zählimpulse über die Leitung e ab. Dies kann in an sich bekannter Weise dadurch bewirkt werden, dass jeweils ein Anforderungsimpuls über die Leitung a bewirkt, dass von den über die Leitung b eintreffenden Taktimpulsen so viele auf die Leitung e weitergegeben werden, wie der genannte Prozentsatz angibt. Die über die Leitung e abgegebenen Zählimpulse werden über die Leitungen h und k in der bereits angegebenen Weise weitergeleitet.

Das gesamte Zählvolumen der Zähleinrichtung nach Fig. 1 beträgt also eine Anzahl von insgesamt 100 Zählschritten. Bei der Zähleinrichtung gemäss Fig. 1 handelt es sich also um einen Dezimalzähler. Diese Anzahl von 100 Zählschritten ergibt sich aus der Zehnerpotenz mit dem ganzzahligen Exponenten 2. Diese Zahl ergibt sich in dem Zusammenhang, dass zwei Schieberegister X und Y vorgesehen sind.

Immer dann, wenn der Zählerstand der Zähleinrichtung nach Fig. 1 ihr Zählvolumen von 100 Zählschritten erreicht, wird sie in der beschriebenen Weise im Überlauf über den Nullstand zyklisch weitergezählt. Sie wird in der beschriebenen Weise durch jede Verarbeitungsanforderung jeweils um eine sich einerseits aus dem Prozentsatz von abzuweisenden Verarbeitungsanforderungen und andererseits aus der dem Zählvolumen entsprechenden Gesamtzahl von Zählschritten sich ergebende Anzahl von Zählschritten weitergeschaltet. Bei jedesmaligem Überlauf gibt die Zähleinrichtung einen Befehl zur Abweisung einer Verarbeitungsanforderung ab, wie bereits im einzelnen beschrieben wurde. Ebenfalls wurde bereits darauf hingewiesen, dass die Zählung von Verarbeitungsanforderungen und die Abweisung einzelnen Verarbeitungsanforderungen zweckmässigerweise auf Initialaufträge beschränkt ist.

In Fig. 2 ist eine alternative erfindungsgemässe Lösung angegeben. Die Zähleinrichtung Z stellt einen Binärzähler dar. Er umfasst insgesamt 10 Zählglieder z0 bis z9. Die Arbeitsweise der Zähleinrichtung Z ist so vorgesehen, dass mit einem ersten über die Leitung g eintreffenden Zählimpuls das Zählglied z0 markiert wird. Bei einem zweiten Zählimpuls, der über die Leitung g eintrifft, erfolgt ein Übertrag vom Zählglied z0 zum Zählglied z1. Dann ist also das Zählglied z1 markiert, wobei das Zählglied z0 wieder in seinen Nullzustand zurückkehrt. Trifft ein dritter Zählimpuls über die Leitung g ein, so wird erneut das Zählglied z0 markiert. Trifft ein vierter Zählimpuls über die Leitung g ein, so erfolgt ein Übertrag von den beiden in diesem Moment bereits markierten Zählgliedern z0 und z1 auf das Zählglied z2. Nun ist also das Zählglied z2 markiert, und die Zählglieder z0 und z1 kehren wieder in ihren Nullzustand zurück. Trifft ein fünfter Zählimpuls ein, so wird das Zählglied z0 wieder markiert. Trifft ein sechster Zählimpuls ein, so erfolgt der bereits genannte Übertrag vom Zählglied z0 auf das Zählglied z1, woraufhin also letzteres markiert ist und das Zählglied z0 wieder in seinen Nullzustand zurückkehrt. Die weiteren Zählvorgänge erfolgen sinngemäss.

Der Zähleinrichtung Z ist eine Auswerteeinrichtung S zugeordnet. Mit Hilfe dieser Auswerteeinrichtung, die z.B. aus einer UND-Schaltung bestehen kann, wird in an sich bekannter Weise erkannt, wann die Zähleinrichtung Z den tausendsten Zählimpuls über die Leitung g erhalten hat. Diese Auswerteeinrichtung ist mit sämtlichen Zählgliedern z0 bis z9 verbunden. Wenn z.B. die Zählglieder z0 bis z2 und z5 bis z9 markiert sind, dagegen aber die Zählglieder z3 und z4 nicht markiert sind, kann der Zählzustand erreicht sein, der einem Eintreffen von insgesamt 1000 Zählimpulsen über die Leitung g entspricht. Dies kann auch erreicht sein, wenn z.B. lediglich die Zählglieder z3 und z5 bis z9 (also nicht die Zählglieder z0 bis z2 und nicht das Zählglied z4) markiert sind. – Wie auch immer die Auswerteeinrichtung S erkennen mag, wann die Zähleinrichtung Z insgesamt 1000 Zählimpulse über die Leitung g erhalten hat – sie erkennt in an sich bekannter und dem Fachmann geläufiger Weise dieses Zählergebnis und gibt über die Leitung z ein Signal ab. Ausserdem bewirkt die Auswerteeinrichtung S in ebenfalls bekannter Weise, dass die Zähleinrichtung Z nach Erhalt von insgesamt 1000 Impulsen in ihren Nullzustand zurückkehrt, in dem also sämtliche Zählglieder z0 bis z9 nicht markiert sind.

Die Zähleinrichtung Z erhält ihre Zählimpulse über die Leitung g von einer Multiplikatorschaltung G, die der Multiplikatorschaltung C in Fig. 1 entspricht. Jede Verarbeitungsanforderung hat zur Folge, dass ein Anforderungsimpuls über die Leitung L zur Multiplikatorschaltung G gelangt. Über die Eingänge g1 bis gm wird der Multiplikatorschaltung G der jeweilige Prozentsatz von abzuweisenden Verarbeitungsanforderungen signalisiert. Dabei ist jeweils einer dieser Eingänge zur Signalisierung eines der verschiedenen Prozentsätze vorgesehen. Jeder dieser Prozentsätze hat einen Wert zwischen 0 und 100, der insgesamt drei Dezimalziffern umfasst, davon zwei vor und eine hinter dem Komma. Der Multiplikatorschaltung G können also über die Eingänge g1 bis gm insgesamt 1000 verschiedene Prozentsätze signalisiert werden (von 0 bis 99,9%). Diese Signalisierung von Prozentsatz-Werten zur Multiplikatorschaltung G über ihre Eingänge g1 bis gm kann auch codiert erfolgen, wodurch sich die Anzahl dieser Eingänge wesentlich reduziert. Hierfür kann nicht nur der Dezimalcode sondern in an sich bekannter Weise auch der Binärcode verwendet werden.

Die Zähleinrichtung nach Fig. 2 erreicht also ihren End-Zählzustand dann, wenn sie über die Leitung g insgesamt 1000 Zählimpulse erhalten hat. Die über die Leitung g übertragenen Zählimpulse sind ein Vielfaches der über die Leitung L eintreffenden Anforderungsimpulse. Das Ausmass dieser Impulsvervielfachung entspricht dem Zehnfachen desjenigen Prozentsatz-Wertes, der der Multiplikatorschaltung G über ihre Eingänge g1 bis gm signalisiert wird. Das Zählvolumen der Zähleinrichtung nach Fig. 2 ist also auf eine Anzahl von insgesamt 1000 Zählschritten begrenzt, die sich aus der Zehnerpotenz mit dem ganzzahligen Exponenten 3 ergibt. Erreicht der Zählerstand der Zähleinrichtung nach Fig. 2 ihr Zählvolumen, so wird sie in der bereits beschriebenen Weise im Überlauf über den Nullstand zyklisch weitergezählt, also jeweils wieder von Null beginnend. In der bereits angegebenen Weise wird die Zähleinrichtung Z durch jeden einzelnen Anforderungsimpuls (über die Leitung L übertragen) jeweils um eine Mehrzahl von Zählschritten weitergeschaltet gemäss den Zählimpulsen pro Anforderungsimpuls (L), die über die Leitung g übertragen werden. Die Zähleinrichtung Z, die in der ebenfalls angegebenen Weise mit Hilfe ihrer Auswerteschaltung S den Endzählzustand nach Erhalt von insgesamt 1000 Zählimpulsen erkennt und den Überlauf und die zyklische Weiterschaltung (wieder von Null beginnend) bewirkt, gibt ausserdem über die Leitung z bei jedesmaligem Überlauf einen Befehl zur Abweisung einer Verarbeitungsanforderung an das betreffende Verarbeitungsschaltwerk hin ab. Wird ein Initialauftrag, der ja einen Anforderungsimpuls bewirkt, durch einen Befehl zur Abweisung beantwortet, so erhält der betreffende Teilnehmer, der eine Verbindung herzustellen beabsichtigt, in an sich bekannter und deshalb hier nicht im einzelnen beschriebener Weise Besetztton. Abweichend von der vorstehenden Darstellung kann auch vorgesehen werden, bei einer Zähleinrichtung nach Fig. 2 als Nullzustand einen Zählzustand vorzusehen, der sich aus der Differenz zwischen dem Wert $2^{10}$ und der Zahl 1000 ergibt. Unter dieser Voraussetzung würde also die Zähleinrichtung jedes Mal mit einem Zählzustand als fiktivem Nullzustand beginnen – also jedes Mal bei einem neu gestarteten Zählvorgang sowie nach jedesmaligem Überlauf –, bei dem von ihren Zählgliedern einige so markiert sind, wie es einer Anzahl von empfangenen 24 Zählimpulsen entspricht. Der fiktive Nullzustand würde sich von dem absoluten Nullzustand unter dieser Voraussetzung um den zuvor angegebenen Wert unterscheiden. Die diesem Wert entsprechende Markierung kann dadurch bewerkstelligt werden, dass bei einem Überlauf zunächst der absolute Nullzustand erreicht wird und dass dann zugleich die Zählglieder z3 (entsprechend 8 empfangenen Zählimpulsen) und z4 (entsprechend 16 empfangenen Zählimpulsen) markiert werden. Unter dieser Voraussetzung kann eine Auswerteeinrichtung S entfallen, und der Überlauf findet dann jeweils statt, wenn der tatsächliche End-Zählzustand der Zähleinrichtung erreicht ist, also dann, wenn der Zählzustand dem Wert 1024 entspricht.

Abweichend von dem zuvor Beschriebenen ist es auch möglich, die Zähleinrichtung so aufzubauen, dass ihr Zählvolumen 1024 oder auch 256 oder 512 Zählschritte umfasst, dass sie also nach 256, 512 oder 1024 empfangenen Zählimpulsen in den Nullzustand hin überläuft. Unter dieser Voraussetzung multipliziert die Multiplikatorschaltung G die erhaltenen Prozentsatz-Daten mit dem jeweils vorgesehenen Zählvolumen. Die Zähleinrichtung wird also bei jeder Verarbeitungsanforderung um eine Anzahl von Zählschritten weitergeschaltet, die sich ganz allgemein jeweils einerseits aus dem Prozentsatz von in dem betreffenden momentanen Betriebszustand abzuweisenden Verarbeitungsanforderungen und andererseits aus der dem Zählvolumen entsprechenden Gesamtzahl von Zählschritten als Produkt ergibt. Die Zähleinrichtung wird dann, wenn ihr Zählerstand das Zählvolumen erreicht, im Überlauf über den Nullzustand zyklisch weitergeschaltet. Sie gibt bei jedesmaligem Überlauf einen Befehl zur Abweisung einer Verarbeitungsanforderung ab. Das Zählvolumen der Zähleinrichtung kann beliebig gewählt werden. Sein Umfang kann an das dekadische Zahlensystem sowie an das binäre Zahlensystem angelehnt sein.

In der bisherigen Beschreibung wurde u. a. der Begriff «zentraler Prozessor» benutzt. Die ebenfalls bereits erwähnten Gruppensteuerwerke können so aufgebaut sein, dass sie sämtliche für die Verbindungsherstellung erforderlichen Verarbeitungsvorgänge durchführen und dass der zentrale Prozessor lediglich die Aufgabe eines Koordinations-Steuerwerkes hat, welches für den Fall, dass an einer Verbindungsherstellung mehrere Gruppensteuerwerke beteiligt sind, dafür sorgt, dass die betreffenden Abläufe von Schaltfunktionen in der erforderlichen Weise koordiniert ausgeführt werden.

**Patentansprüche**

1. Schaltungsanordnung für Fernmeldevermittlungsanlagen, insbesondere Fernsprechvermittlungsanlagen, mit zur Erfassung von an ein Verarbeitungsschaltwerk gerichteten Verarbeitungsanforderungen dienenden Zähleinrichtungen (X, Y, Z), die nach Massgabe eines von einer Verkehrsmesseinrichtung an sie übertragenen Prozentsatzes eine Abweisung eines dementsprechenden Teiles dieser Verarbeitungsanforderungen bewirken, wobei die durch eine Anzahl von Zählschritten in ihrem Zählvolumen begrenzte Zähleinrichtung Mittel (C, G) enthält, durch die sie bei jeder Verarbeitungsanforderung (a, L) um eine Anzahl von Zählschritten weitergeschaltet wird (e, g), die sich jeweils einerseits aus dem Prozentsatz (cl, ... cn, gl ... gm) von in dem betreffenden momentanen Betriebszustand abzuweisenden Verarbeitungsanforderungen und andererseits aus der dem Zählvolumen entsprechenden Gesamtzahl von Zählschritten als Produkt ergibt, und wobei die Zähleinrichtung Mittel (R,S) enthält, die dann, wenn ihr Zählerstand das Zählvolumen erreicht, die Zähleinrichtung im Überlauf über den Nullstand zyklisch weiterschalten, und die veranlassen, dass die Zähleinrichtung jedesmal beim Überlauf einen Befehl zur Abweisung einer Verarbeitungsanforderung abgibt.

2. Schaltungsanordnung nach Anspruch 1, wobei die Zähleinrichtung (Z) mit einem Speicher (S) zur Speicherung des Prozentsatzes bzw. derjenigen Anzahl von Zählschritten ausgestattet ist, um die die Zähleinrichtung (Z) bei jeder eintreffenden Verarbeitungsanforderung weitergezählt wird.

3. Schaltungsanordnung nach Anspruch 1, wobei das Zählvolumen der Zähleinrichtung (Z) eine Anzahl von Zählschritten beträgt, die sich aus einer Zehnerpotenz mit einem ganzzahligen Exponenten ergibt.

## Claims

1. Circuit arrangement for telecommunication exchanges, especially telephone exchanges, with counting devices (X, Y, Z) for registering processing requests issued to a processing network, which counting devices, according to a percentage transmitted to them by a traffic measuring device, effect a rejection of a corresponding portion of these processing requests, wherein the counting device, restricted in its counting volume by a number of counting steps, contains means (C, G) by means of which it is incremented (e, g) for every processing request (a, L) by a number of counting steps which is obtained as a product in each case on the one hand from the percentage (c1, ... cn, g1 ... gm) of the processing requests to be rejected in the current operating status in question, and on the other hand from the total number, corresponding to the counting volume, of counting steps, and wherein the counting device contains means (R, S) which, when its counter status reaches the counting volume, cyclically increment the counting device in the overflow over the zero state, and cause said counting device to issue a command for rejecting a processing request each time an overflow occurs.

2. Circuit arrangement according to Claim 1, wherein the counting device (Z) is equipped with a memory (S) for storing the percentages or the number of counting steps by which the counting device (Z) is incremented for each incoming processing request.

3. Circuit arrangement according to Claim 1, wherein the counting volume of the counting device (Z) amounts to a number of counting steps which is obtained by raising ten to the power of an integral exponent.

## Revendications

1. Montage pour des installations de télécommunications, notamment pour des installations de commutation téléphonique, comportant des dispositifs de comptage (X, Y, Z), qui servent à détecter des demandes de traitement envoyées à une unité de commutation exécutant le traitement et réalisent, en fonction d'un pourcentage transmis par un dispositif de mesure du trafic à ces dispositifs de comptage, le rejet d'une partie correspondante de ces demandes de traitement, et dans lequel le dispositif de comptage, dont la capacité de comptage est limitée par un nombre de pas de comptage, contient des moyens (C, G), qui, lors de chaque demande de traitement (a, L), le font avancer (e, g) sur un nombre de pas de comptage qui est obtenu en tant que produit respectivement d'une part du pourcentage (cl, ... cn, gl ... gm) de demandes de traitement devant être rejetées dans l'état de fonctionnement instantané considéré, et d'autre part du nombre total, qui correspond à la capacité de comptage, de pas de comptage, et dans lequel le dispositif de comptage contient des moyens (R, S) qui, lorsque l'état de comptage du compteur atteint la capacité de comptage, font avancer cycliquement le dispositif de comptage avec dépassement de l'état zéro et agissent en sorte que le dispositif de comptage délivre chaque fois, lors du dépassement de la valeur zéro, une instruction pour rejeter une demande de traitement.

2. Montage suivant la revendication 1, dans lequel le dispositif de comptage (37) est équipé d'une mémoire (S) servant à mémoriser le pourcentage ou bien comporte le nombre de pas de comptage, dont le dispositif de comptage (Z) est avencé lors de l'arrivée de chaque demande de traitement.

3. Montage suivant la revendication 1, dans lequel la capacité de comptage du dispositif de comptage (Z) est égale à un nombre de pas de comptage, qui est égal à une puissance de dix avec un exposant entier.

# FIG 1

# FIG 2